# EUROPÄISCHE PATENTSCHRIFT

(11) **EP 2 105 649 B1**
(45) Veröffentlichungstag und Bekanntmachung des Hinweises auf die Patenterteilung: **30.01.2013**
(21) Anmeldenummer: 08153496.8
(22) Anmeldetag: 28.03.2008
(51) Int. Cl.: F16M 1/00

(54) **Maschinenrahmen**
Machine framework
Cadre de machine

(43) Veröffentlichungstag der Anmeldung: 30.09.2009
(73) Patentinhaber: Neuman & Esser Deutschland GmbH & Co. KG, 52531 Übach-Palenberg (DE)
(72) Erfinder: Ritzen, Franz-Josef, 52134 Herzogenrath (DE); Keller, Kurt, 52146 Würselen (DE); Kremers, Karl Josef, 52385 Nideggen (DE)
(74) Vertreter: Fuchs

(56) Entgegenhaltungen:
- WO-A-2008/019416
- CH-A5- 692 738
- DE-A1- 2 165 203
- DE-A1- 2 300 895
- DE-A1- 4 333 048
- DE-A1- 10 261 274
- DE-A1- 19 953 900
- GB-A- 1 247 349

## Beschreibung

Die Erfindung betrifft einen Maschinenrahmen zur Aufnahme von Maschinen oder Anlagen gemäß dem Oberbegriff des Anspruchs 1.

Derartige Maschinenrahmen werden beispielsweise bei Luftverdichter-Anlagen verwendet. Luftverdichter-Anlagen werden zum Aufspüren von Erdöl- und Erdgaslagerstätten eingesetzt und müssen zu diesem Zweck auf geeignete Transportmittel, wie z.B. Lastkraftwagen oder Erkundungsschiffe verladen werden.

Die Anlage wird hierzu z.B. von Containerkränen am Maschinenrahmen erfasst und kann auf einfache Weise verladen und auf den Transportfahrzeugen verstaut werden.

Auf einem Erkundungsschiff sind solche Anlagen über längere Zeit in ständigem Einsatz und müssen daher vor Ort in Stand gehalten, gewartet und ggf. auch repariert werden. Da die Komponenten einer solchen Anlage aufgrund ihres Gewichtes nicht von Hand bewegt werden können, besteht die Notwendigkeit, Hilfsgerüste in den Bereich der schweren Bauteile zu schaffen, Mobilkräne einzusetzen oder die Bauteile in den Wirkbereich von stationären Hebezeugen zu verbringen.

Auf Schiffen sind entweder die entsprechenden Hilfsmittel nicht vorhanden oder aus Platzgründen nicht einsetzbar, insbesondere wenn die Anlagen unter Deck angeordnet werden.

Die CH 692 738 A5 beschreibt einen Container mit einer Plattform und einem Rahmenaufbau. Dieser Container ist so ausgebildet, dass er von einem Transportfahrzeug selbst auf- und abgeladen werden kann, oder alternativ mit einem Gabelstapler gehandhabt werden kann. Dazu verfügt der Container über eine Plattform mit zwei Längsholmen, die in statischer Hinsicht so ausgebildet sind, dass sie als Schienen dienen, um den Container über zwei Rollen auf ein Transportfahrzeug aufziehen zu können und die zusätzlich mit Gabelstaplertaschen versehen sind, um den Container alternativ mit einem Gabelstapler handhaben zu können.

Am Rahmen kann ein H-förmiges Aufzugsgestell aus zwei Seitenträgern und einem Querträger angebracht werden.

Dieser Container hat den Nachteil, dass das Aufzugsgestell bei Nichtgebrauch separat gelagert werden muss und somit zusätzlichen Stauraum benötigt. Da der Querträger dieses Aufzugsgestells zwischen der oberen Querstrebe und der unteren Querstrebe angeordnet ist, eignet er sich aufgrund seines niedrigen Einbaus nicht als Lastbalkeneinrichtung, um Instandhaltung, Wartung und Reparaturarbeiten der innerhalb des Maschinenrahmens angeordneten Maschinen oder Anlagen auf einfache Weise durchführen zu können.

Die GB 1 247 349 beschreibt eine Containereinrichtung, die aus einem stabilen kräfteaufnehmenden Rahmen und dem eigentlichen kastenförmigen Behälter besteht, der nur so stabil ausgebildet sein muss, damit er das Füllgut tragen kann.

Die DE-OS 21 65 203 beschreibt einen Kastenrahmen für den Gerätebau, insbesondere für Klima- bzw. Zu- und Abluftgeräte. Hierbei kommt es auf die Ausbildung der Eckverbinder an, mit denen die Profilleisten des Rahmens leicht und schnell zu einem stabilen Rahmenskelett zusammengesteckt werden können. An dem Tragstück des Eckverbinders können Ringschrauben zum Aufhängen des Kastenrahmens über Seile eingeschraubt werden.

Die DE-OS 23 00 895 beschreibt eine Anordnung mit einer selbsttragenden Rahmenkonstruktion für eine mobile Wärmezentrale.

Die DE 199 53 900 A1 offenbart ein Fahrzeug mit Saugbaggeraufbauten, die auf einer Tragvorrichtung angeordnet sind.

Es ist daher Aufgabe der Erfindung, einen Maschinenrahmen bereitzustellen, mit dem Instandhaltung, Wartung und Reparaturarbeiten der innerhalb des Maschinenrahmens angeordneten Maschinen oder Anlagen auf einfache Weise durchführbar sind.

Diese Aufgabe wird mit einem Maschinenrahmen gemäß den Merkmalen des Anspruchs 1 gelöst.

An der Lastbalkeneinrichtung kann z.B. ein Hebezeug angebracht werden, mit dem z.B. die Maschine oder die Anlagenkomponente, die gewartet oder repariert werden soll, angehoben und bewegt werden kann. Die Lastbalkeneinrichtung wird nur dann an der oberen Horizontalstrebe angebracht, wenn sie benötigt wird.

Nach Durchführung der erforderlichen Arbeiten kann die Lastbalkeneinrichtung wieder entfernt werden, so dass sie ein Umsetzen der Anlage oder deren Transport nicht behindert.

Die Lastbalkeneinrichtung weist mindestens eine am Maschinenrahmen angeordnete Lastbalkenkomponente und/oder mindestens ein Element des Rahmens auf. Zur Installation der Lastbalkeneinrichtung werden nur Bauteile verwendet, die bereits am Maschinenrahmen vorhanden sind. Es handelt sich hierbei um Bestandteile des Rahmens, die in anderer Konfiguration zu einer Lastbalkeneinrichtung zusammengebaut werden, oder um eine Lastbalkeneinrichtung die bereits vorhanden ist und lediglich in eine Arbeitsposition gebracht werden muss. Es kann als weitere Alternative auch eine Lastbalkenkomponente am Maschinenrahmen vorgesehen sein, die sich in einer Ruheposition befindet und bei Bedarf in eine Arbeitsposition bewegbar ist und dort mittels eines Rahmenelementes zu einer Lastbalkeneinrichtung komplettiert wird. Es ist deshalb nicht notwendig, auf zusätzliche Bauteile, die entweder nur schwer verfügbar sind oder ggf. nur bedingt geeignet sind, zurückzugreifen.

Alle notwendigen Komponenten zur Herstellung der Lastbalkeneinrichtung sind am oder im Rahmen vorhanden und dort insbesondere unverlierbar angeordnet. Insbesondere durch die Verwendung vorhandener Rahmenelemente, aus denen die Lastbalkeneinrichtung zusammenbaubar ist, werden für das Vorhalten einer solchen Lastbalkeneinrichtung keine oder nur geringfügige Mehrkosten verursacht.

Die Installation kann entweder von Hand oder unter Zuhilfenahme von einfachen, in der Regel vorhandener Werkzeuge, wie Schraubenschlüssel etc. vorgenommen werden.

Die Lastbalkeneinrichtung kann daher vor Ort, z. B. in strukturschwachen, unzugänglichen oder unwirtlichen Regionen, wie es z. B. bei der Suche nach Bodenschätzen der Fall ist, mit den dort üblicherweise vorhandenen Mitteln installiert und verwendet werden.

Die Lastbalkeneinrichtung weist vorzugsweise zwei Stützen und einen die beiden Stützen verbindenden Balken auf. Es sind für diese Ausführungsform lediglich drei einfache Komponenten erforderlich, die aus am Maschinenrahmen befindlichen Bauteilen bereitgestellt werden können.

Mindestens eine obere Horizontalstrebe weist mindestens ein lösbar befestigtes Rahmenelement auf. Aus einem oder mehreren der oberen Horizontalstreben können Rahmenelemente herausgenommen werden, wodurch die betroffene Strebe unterbrochen wird. An den betreffenden Stellen wird der Maschinenrahmen zwar geschwächt, was jedoch insoweit vertretbar ist, als bei Wartungs- und Reparaturarbeiten die Anlage ohnehin nicht im Betrieb ist und der Maschinenrahmen somit nicht in der üblichen Weise belastet wird.

Die lösbar befestigten Rahmenelemente sind vorzugsweise an oder in der oberen Horizontalstrebe vorgesehen, weil diese leicht zugänglich ist. Außerdem ist es vorteilhaft, wenn an der Stelle, wo die Lastbalkeneinrichtung installiert wird, unter der Lastbalkeneinrichtung ein Freiraum geschaffen wird, um die notwendigen Arbeiten durchführen zu können, insbesondere wenn an der Lastbalkeneinrichtung Hebezeuge montiert werden sollen. Durch den Ausbau des Rahmenelementes wird der nötige Arbeitsraum geschaffen.

Es ist deshalb von Vorteil, wenn die lösbar befestigten Rahmenelemente in den Bereichen vorgesehen sind, wo auch die reparatur- oder wartungsbedürftigen Maschinen oder Anlagenkomponenten innerhalb des Rahmengestells angeordnet sind.

Die Länge der lösbar befestigten Rahmenelemente ist auf die gewünschten Abmessungen der Lastbalkeneinrichtung abgestimmt. Es können unterschiedlich lange Rahmenelemente im Rahmen vorgesehen sein, um unterschiedlich hohe Lastbalkeneinrichtungen zusammenbauen zu können. Um mehrere unterschiedlich lange Rahmenelemente bereitstellen zu können, können diese auch an anderer Stelle als in den oberen Horizontalstreben vorgesehen sein. Lösbar befestigte Rahmenelemente können vorzugsweise auch Bestandteile von anderen Streben, insbesondere von Verbindungsstreben sein, die als Horizontal- oder Vertikalstreben ausgebildet sein können.

Nach Durchführung der Instandhaltungs-, Wartungs- und Reparaturarbeiten werden die Rahmenelemente wieder an ihrem ursprünglichen Ort in die Streben eingesetzt, so dass die Steifigkeit des Rahmengestells wieder hergestellt wird.

Vorrugsweise ist die Lastbalkeneinrichtung oder die Lastbalkenkomponente ist an einer Strebe von einer Ruhe- in eine Arbeitsposition und umgekehrt klappbar oder schwenkbar angeordnet. Die Lastbalkeneinrichtung oder die Lastbalkenkomponente wird bei Nichtgebrauch in ihre Ruheposition weggeschwenkt oder weggeklappt und verbleibt am Maschinenrahmen.

Vorzugsweise erfolgt das Wegschwenken oder Wegklappen in Ruheposition in eine Ebene parallel zu einer Wandfläche des Rahmengestells.

Die Lastbalkenkomponente weist vorzugsweise mindestens eine Stütze auf. Die Lastbalkenkomponente kann beispielsweise auch beide Stützen oder eine Stütze und den dazugehörigen Balken aufweisen. Die Lastbalkenkomponente ist vorzugsweise mit mindestens einem lösbar befestigten Rahmenelement verbindbar.

Die Lastbalkeneinrichtung besteht vorzugsweise vollständig aus lösbar befestigten Rahmenelementen.

Die Rahmenelemente sind untereinander oder mit der Lastbalkenkomponente verschraubbar und/oder steckbar verbunden. Auf diese Weise wird der Zusammenbau und die Demontage der Lastbalkeneinrichtung erleichtert, was ohne großen Werkzeugaufwand durchführbar ist.

Vorzugsweise weist das Rahmenelement und/oder die Lastbalkenkomponente endseitig eine Montageplatte auf. Eine solche Montageplatte ist dazu vorgesehen, dass die zu verbindenden Bauteile miteinander beispielsweise verschraubt werden können.

Vorzugsweise weist der Maschinenrahmen die Abmessungen eines Containers auf. Dadurch wird es möglich, die Anlage mit dem Maschinenrahmen auf einem LKW oder einem Zugwagon auf einfache Weise zu transportieren. Außerdem wird dadurch der Transport auf einem Containerschiff vereinfacht.

Der Balken kann Mittel zum Befestigen von Hebezeug wie z.B. einem Flaschenzug, einem Seilzug, einem Kettenzug oder ähnlichem aufweisen. Solche Mittel sind z.B. Bohrungen im Balken, in die das betreffende Hebezeug eingehängt werden kann.

Der Maschinenrahmen ist vorzugsweise zur Aufnahme einer Luftverdichter-Anlage ausgebildet, die einen Kolbenkompressor aufweist.

Die Lastbalkeneinrichtung ist bei dieser Ausführungsform vorzugsweise im Bereich des Kolbenkompressors anbringbar. Dadurch wird es möglich, auf einfache Weise beispielsweise die Kolbenringe des Kolbenkompressors auszutauschen.

Der Maschinenrahmen ist vorzugsweise überall dort einsetzbar, wo große Maschinen oder Anlagen vorgesehen sind, wobei die Maschinen oder Anlagen oder deren Komponenten aufgrund ihres Gewichtes nicht händisch bewegt werden können. Die Bauhöhe des Maschinenrahmens beträgt vorzugsweise > 1,50 m, insbesondere > 2,0 m. Das Gewicht der Maschinen, Anlagen und deren Komponenten liegt in der Regel bei mehr als 100 kg, insbesondere bei mehr als 500 kg und kann auch bis zu mehreren tausend kg betragen.

Weitere Einsatzgebiete sind beispielsweise Dampferzeugeranlagen, Kraftwerksanlagen, Rauchgasreinigungsanlagen, Gasverdichteranlagen, Papiermaschinen, Pressen, Werkzeugmaschinen, Raffinerieanlagen oder Verpackungsmaschinen.

Der Vorteil des erfindungsgemäßen Maschinenrahmens mit Lastbalkeneinrichtung besteht darin, dass er zu Zeiten des bestimmungsgemäßen Gebrauchs der Anlage bzw. der Maschine die Aufgabe erfüllt, statische und dynamische Lasten aufzunehmen und gleichzeitig zu Zeiten des Instandhaltungs-, Wartungs- und Reparaturbetriebs der Anlage bzw. Maschine dazu verwendet werden kann, eben diese Arbeiten zu jeder Zeit, an jedem Ort und unabhängig von zusätzlichen Hilfsgerüsten durchzuführen.

Beispielhafte Ausführungsformen der Erfindung werden nachfolgend anhand der Zeichnungen näher erläutert. Es zeigen:
- Fig. 1: eine perspektivische Darstellung einer Luftverdichter-Anlage mit dem dazugehörigen Maschinenrahmen,
- Fig. 2: einen perspektivische vereinfachte Darstellung des Maschinenrahmens ohne Lastbalkeneinrichtung,
- Fig. 3: den in Fig. 2 gezeigten Maschinenrahmen, an dem eine Lastbalkeneinrichtung angebracht ist,
- Fig. 4a - 7a: verschiedene Ausführungen von Lastbalkeneinrichtungen,
- Fig. 4b - 7b: vergrößerte Darstellungen der zu den Figuren 4a bis 7a gehörenden Verbindungen.

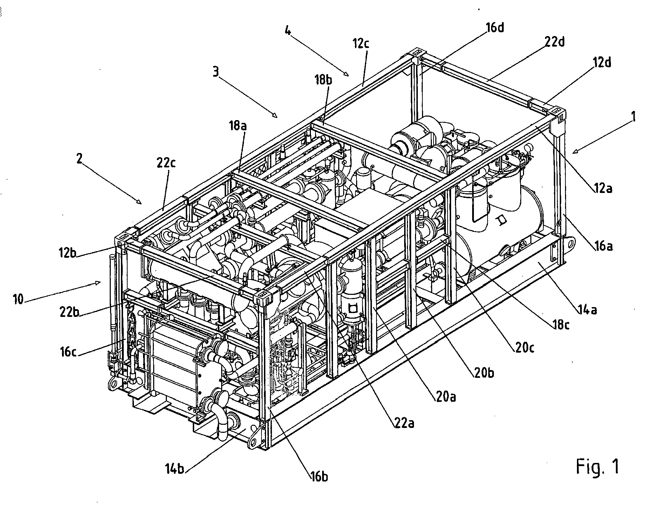

In Fig. 1 ist eine Luftverdichter-Anlage 1 dargestellt, die im Wesentlichen drei Abschnitte aufweist, die durch einen Kolbenkompressor 2, einen Antriebsmotor 3 und einen Schraubenverdichter 4 einschließlich der dazugehörigen Zusatzkomponenten gebildet werden. Die Luftverdichter-Anlage 1 ist von einem Maschinenrahmen 10 in Form eines Rahmengestells umgeben, wobei einzelne Komponenten der Luftverdichter-Anlage 1 auf bzw. an dem Maschinenrahmen 10 befestigt sind.

Der Maschinenrahmen 10 weist untere Horizontalstreben 14a-d, obere Horizontalstreben 12a-d sowie an den vier Ecken Vertikalstreben 16a-d auf. Ferner sind horizontale Verbindungsstege 18a, b zwischen den oberen Horizontalstreben 12a und 12c vorgesehen. Im Bereich zwischen den Vertikalstreben 16a und 16b befinden sich weitere Vertikalstreben als Verbindungsstreben 20a, b, c, die wiederum über horizontale Verbindungsstreben 18c miteinander verbunden sind und auf diese Weise eine zusätzliche Versteifung des Gesamtrahmens bewirken. Die oberen Horizontalstreben 12a-d weisen lösbar befestigte Rahmenelemente 22a-d auf.

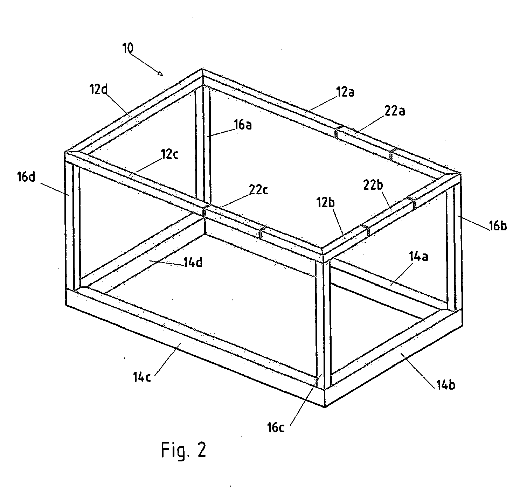

In Fig. 2 ist der in Fig. 1 gezeigte Maschinenrahmen 10 vereinfacht dargestellt. Es ist zu sehen, dass die oberen Horizontalstreben 12a, 12b und 12c jeweils lösbar befestigte Rahmenelemente 22a, b und c aufweisen. Diese Rahmenelemente 22a, b und c sind auf geeignete Weise mit den Horizontalstreben verbunden, z.B. gesteckt oder verschraubt und sind somit Bestandteil der Streben.

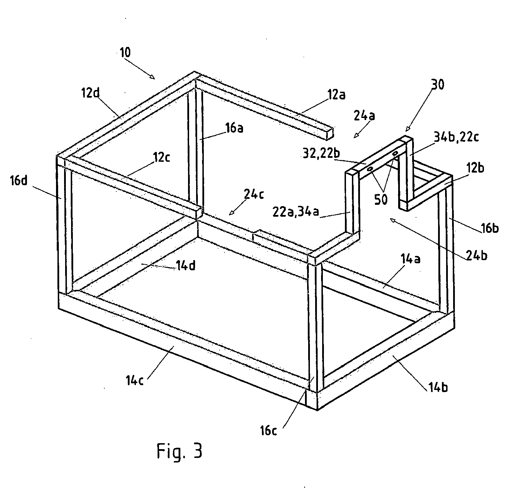

In der Fig. 3 ist der in Fig. 2 gezeigte Rahmen dargestellt, wobei aus den drei Rahmenelementen 22a, b und c eine Lastbalkeneinrichtung 30 zusammengebaut ist. Die Lastbalkeneinrichtung 30 befindet sich auf der Horizontalstrebe 12b, wobei auch das Rahmenelement 22b zum Aufbau der Lastbalkeneinrichtung 30 verwendet wurde und den Balken 32 bildet.

Die beiden Stützen 34a, b der Lastbalkeneinrichtung 30 werden durch die ausgebauten Rahmenelemente 22a und 22c gebildet. Damit definieren die Rahmenelemente 22a, c die Höhe der Lastbalkeneinrichtung.

Dadurch dass das Rahmenelement 22b aus der Horizontalstrebe 12b entfernt worden ist und für die Lastbalkeneinrichtung verwendet wurde, wird unterhalb der Lastbalkeneinrichtung ein Freiraum 24b und somit der entsprechende Arbeitsraum geschaffen, in dem nicht dargestellte Hebezeuge nach unten abgesenkt werden können, um entsprechende Komponenten oder Anlagenteile der betreffenden Anlage erfassen zu können. Zu diesem Zweck weist der Balken 32 Befestigungsmittel 50 in Form von Bohrungen auf, in die Hebezeuge eingehängt werden können.

An den Stellen, wo die Horizontalstreben 12a und 12c unterbrochen sind, sind ebenfalls Freiräume 24a, 24c gebildet worden. Nach erfolgten Wartungs- und Instandhaltungsarbeiten kann die Lastbalkeneinrichtung 30 wieder rückgebaut werden, indem die betreffenden Rahmenelemente 22a, b und c an ihren ursprünglichen Ort in den Horizontalstreben 12a, b und c eingesetzt werden.

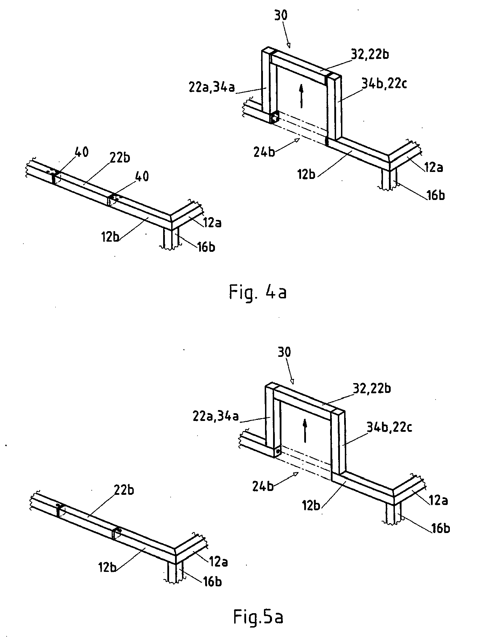

In der Fig. 4a ist eine beispielhafte Ausführungsform einer Lastbalkeneinrichtung 30 dargestellt. Es ist zu sehen, dass die drei die Lastbalkeneinrichtung 30 bildenden Rahmenelemente 22a, b und c, die die Stützen 34a, b und den Balken 32 bilden miteinander verschraubt sind. Hierzu weist beispielsweise das Rahmenelement 22b eine Montageplatte 40 auf, die eine Verschraubung mit den benachbarten Elementen ermöglicht.

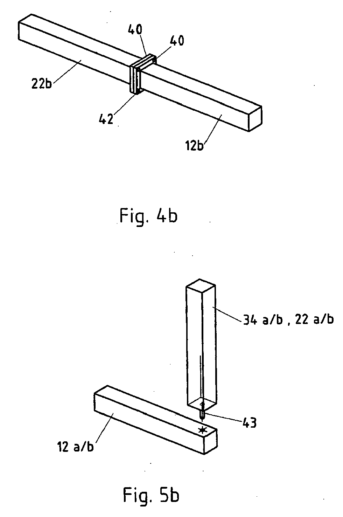

In der Fig. 4b ist die Schraubverbindung vergrößert dargestellt. Es ist zu sehen, dass am Ende der betreffenden Rahmenelemente bzw. der Strebe 12b jeweils eine Montageplatte 40 mit entsprechenden Bohrungen zum Durchstecken von Schrauben 42 vorgesehen sind.

In der Fig. 5a ist die Lastbalkeneinrichtung 30 ebenfalls durch die Rahmenelemente 22a, b und c gebildet, wobei im Unterschied zu der Fig. 4a die einzelnen Rahmenelemente durch Stecken miteinander verbunden sind.

In der Fig. 5b ist eine derartige Steckverbindung vergrößert dargestellt. Es ist zu sehen, dass in den betreffenden Rahmenelementen bzw. Streben 12a, b jeweils ein Loch zur Aufnahme eines an den Streben 34a, b jeweils befindlichen Dorns 43 vorgesehen ist.

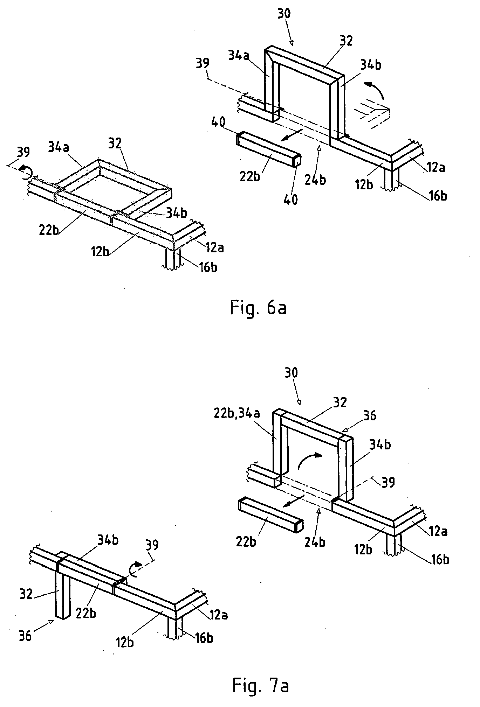

In der Fig. 6a ist eine weitere Ausführungsform dargestellt, bei der die Lastbalkeneinrichtung 30 vollständig am Rahmen vorhanden und angeordnet ist. Wie im linken Teil der Fig. 6a zu sehen ist, besteht die Lastbalkeneinrichtung aus den Streben 34a, b und dem Balken 32. Die Lastbalkeneinrichtung 30 befindet sich in der Ebene der Deckfläche des Maschinenrahmens 10 und kann wie im rechten Teil der Fig. 6a zu sehen ist, aus dieser liegenden Ruheposition in die Arbeitsposition aufgerichtet werden. Dies erfolgt durch ein Klappen um die Achse 39. Gleichzeitig wird aus der Strebe 12b das Rahmenelement 22b zur Schaffung des Freiraums 24b entfernt. Dieses Rahmenelement 22b findet bei der Ausbildung der Lastbalkeneinrichtung 30 keine Verwendung.

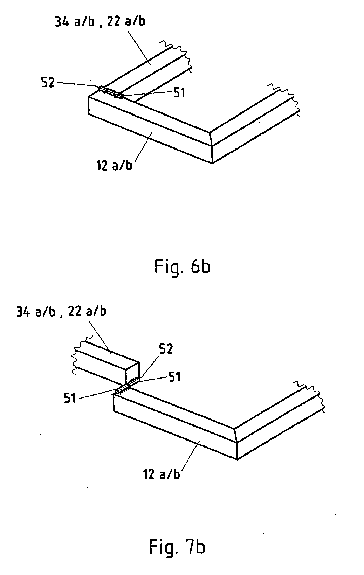

In der Fig. 6b sind die Verbindungselemente bzw. der Klappmechanismus vergrößert dargestellt. Es ist zu sehen, dass ein mehrteiliges Scharnier 51 teils mit der Stütze 34a, b und teils mit der Strebe 12a, b verbunden ist. Die einzelnen Scharnierteile werden durch einen Scharnierbolzen 52 verbunden.

In der Fig. 7a ist eine weitere Ausführungsform dargestellt, in der eine Lastbalkenkomponente 36, Stütze 34b sowie Balken 32 vorgesehen ist. Im Gegensatz zu der Anordnung gemäß der Fig. 6a ist die Lastbalkenkomponente 36 schwenkbar angeordnet und befindet sich in der linken Darstellung in der abgesenkten Ruhestellung, in der die Lastbalkenkomponente 36 parallel zu einer Wandfläche des Maschinenrahmens 10 angeordnet ist.

Am unteren Ende der Stütze 34b ist ein Schwenkmechanismus dargestellt, der es erlaubt, die Lastbalkenkomponente 36 um die Achse 39 nach oben in die Arbeitsposition zu verschwenken (siehe rechte Darstellung der Fig. 7a). Auch bei dieser Ausführungsform wird das Rahmenelement 22b aus der Strebe 12b entfernt, um den nötigen Arbeitsraum 24b zu schaffen. Nach dem Aufrichten der Lastbalkenkomponente 36 wird das Rahmenelement 22b als Stütze 34a an der Lastbalkenkomponente 36 befestigt und mit der Horizontalstrebe 12b verbunden und gesichert.

Die Einzelheiten der Schwenkeinrichtung und der Verbindung der Strebe 34a ist in der Fig. 7b dargestellt. Es ist zu sehen, dass das mehrteilige Scharnier 51 teils mit der stütze 34a, b und teils mit der Strebe 12a, b verbunden ist. Die einzelnen Scharnierteile werden ebenfalls durch den Scharnierbolzen 52 verbunden.

### Bezugszeichenliste

- 1: Luftverdichter-Anlage
- 2: Kolbenkompressor
- 3: Antriebsmotor
- 4: Schraubenverdichter

- 10: Maschinenrahmen
- 12a-d: obere Horizontalstrebe
- 14a-d: untere Horizontalstrebe
- 16a-d: Vertikalstrebe
- 18a-c: horizontale Verbindungsstrebe

- 20a-c: vertikale Verbindungsstrebe
- 22a-d: Rahmenelement
- 24a-c: Freiraum

- 30: Lastbalkeneinrichtung
- 32: Balken
- 34a, b: Stütze
- 36: Lastbalkenkomponente
- 39: Schwenkachse

- 40: Montageplatte
- 42: Schraube
- 43: Dom

- 50: Befestigungsmittel
- 51: Scharnier
- 52: Scharnierbolzen

## Patentansprüche

1. Ausgangsmaschinenrahmen (10) zur Aufnahme von Maschinen oder Anlagen mit einem 3-dimensionalen Rahmengestell mit Vertikalstreben (16a-d) und mit unteren und oberen Horizontalstreben (12a-d, 14a-d), wobei der Ausgangsmaschinenrahmen in einen Maschinenrahmen mit einer Lastbalkeneinrichtung umgebaut werden kann,
wobei nur Bestandteile verwendet werden, die bereits am Ausgangsmaschinenrahmen vorhanden sind, **dadurch gekennzeichnet, dass** der Ausgangsmaschinenrahmen zumindest eine obere Horizontalstrebe mit mindestens einem lösbar befestigten Rahmenelement aufweist, das Teil der Horizontalstrebe ist, so dass nach Entfernung eine einen Freiraum aufweisende Horizontalstrebe in dem Maschinenrahmen gebildet werden kann.

2. Ausgangsmaschinenrahmen nach Anspruch 1, **dadurch gekennzeichnet, dass** die Lastbalkeneinrichtung (30) an einer oberen Horizontalstrebe (12a-d) anbringbar ist.

3. Ausgangsmaschinenrahmen nach Anspruch 1 oder 2, **dadurch gekennzeichnet, dass** die Lastbalkeneinrichtung (30) mindestens eine am Ausgangsmaschinenrahmen (10) angeordnete Lastbalkenkomponente (36) und/oder mindestens ein Element (22a-d) des Ausgangsmaschinenrahmens (10) aufweist.

4. Ausgangsmaschinenrahmen nach einem der Ansprüche 1 bis 3, **dadurch gekennzeichnet, dass** die Lastbalkeneinrichtung (30) zwei Stützen (34a, b) und einen die beiden Stützen (34a, b) verbindenden Balken (32) aufweist.

5. Ausgangsmaschinenrahmen nach einem der Ansprüche 1 bis 4, **dadurch gekennzeichnet, dass** die Lastbalkeneinrichtung (30) im Bereich des lösbar befestigten Rahmenelementes (22a-d) angebracht ist.

6. Ausgangsmaschinenrahmen nach einem der Ansprüche 1 bis 5, **dadurch gekennzeichnet, dass** die Lastbalkeneinrichtung (30) oder die Lastbalkenkomponente (36) an einer Strebe (12a-d, 14a-d, 16a-d) von einer Ruheposition in eine Arbeitsposition und umgekehrt klappbar oder schwenkbar angeordnet ist.

7. Ausgangsmaschinenrahmen nach einem der Ansprüche 3 bis 6, **dadurch gekennzeichnet, dass** die Lastbalkenkomponente (36) mindestens eine Stütze (34a, b) aufweist.

8. Ausgangsmaschinenrahmen nach einem der Ansprüche 3 bis 7, **dadurch gekennzeichnet, dass** die Lastbalkenkomponente (36) mit mindestens einem lösbar befestigten Rahmenelement (22a-d) verbindbar ist.

9. Ausgangsmaschinenrahmen nach einem der Ansprüche 1 bis 8, **dadurch gekennzeichnet, dass** die Lastbalkeneinrichtung (30) aus lösbar befestigten Rahmenelementen (22a-d) besteht.

10. Ausgangsmaschinenrahmen nach einem der Ansprüche 3 bis 9, **dadurch gekennzeichnet, dass** die Rahmenelemente (22a-d) untereinander, oder mit der Lastbalkenkomponente (36) schraubbar und/oder steckbar verbunden sind.

11. Ausgangsmaschinenrahmen nach einem der Ansprüche 3 bis 10, **dadurch gekennzeichnet, dass** das Rahmenelement (22a-d) und/oder die Lastbalkenkomponente (36, 38) endseitig eine Montageplatte (40) aufweist.

12. Ausgangsmaschinenrahmen nach einem der Ansprüche 1 bis 11, **dadurch gekennzeichnet, dass** der Balken (32) Mittel zum Befestigen von Hebezeug aufweist.

13. Ausgangsmaschinenrahmen nach einem der Ansprüche 1 bis 12, **dadurch gekennzeichnet, dass** er zur Aufnahme einer Luftverdichter-Anlage (1) ausgebildet ist, die einen Kolbenkompressor (2) aufweist.

14. Ausgangsmaschinenrahmen nach Anspruch 13, **dadurch gekennzeichnet, dass** die Lastbalkeneinrichtung (30) im Bereich des Kolbenkompressors (2) anbringbar ist.

## Claims

1. An initial machine frame (10) for receiving machines or plants with a 3-dimensional framework having vertical struts (16a-d) and having lower and upper horizontal struts (12a-d, 14a-d), the initial machine frame being capable of conversion into a machine frame having a load beam device using only components that are already present on the initial machine frame, **characterised in that** the initial machine frame has at least one upper horizontal strut with at least one detachably fastened frame element that is part of the horizontal strut, so that, after removal, a horizontal strut having a free space may be formed in the machine frame.

2. An initial machine frame according to claim 1, **characterised in that** the load beam device (30) may be mounted on an upper horizontal strut (12a-d).

3. An initial machine frame according to claim 1 or 2, **characterised in that** the load beam device (30) has at least one load beam component (36) that is disposed on the initial machine frame (10) and/or has at least one element (22a-d) of the initial machine frame (10).

4. An initial machine frame according to any one of claims 1 to 3, **characterised in that** the load beam device (30) has two supports (34a, b) and a beam (32) connecting the two supports (34a, b).

5. An initial machine frame according to any one of claims 1 to 4, **characterised in that** the load beam device (30) is mounted in the region of the detachably fastened frame element (22a-d).

6. An initial machine frame according to any one of claims 1 to 5, **characterised in that** the load beam device (30) or the load beam component (36) is arranged at a strut (12a-d, 14a-d, 16a-d) to be folded or pivoted from a resting position into a working position and *vice versa.*

7. An initial machine frame according to any one of claims 3 to 6, **characterised in that** the load beam component (36) has at least one support (34a, b).

8. An initial machine frame according to any one of claims 3 to 7, **characterised in that** the load beam component (36) is connectable to at least one detachably fastened frame element (22a-d).

9. An initial machine frame according to any one of claims 1 to 8, **characterised in that** the load beam device (30) consists of detachably fastened frame elements (22a-d).

10. An initial machine frame according to any one of claims 3 to 9, **characterised in that** the frame elements (22a-d) are connected to one another or to the load beam component (36) in a bolt-on and/or plug-in manner.

11. An initial machine frame according to any one of claims 3 to 10, **characterised in that** the frame element (22a-d) and/or the load beam component (36, 38) has at the end thereof a mounting plate (40).

12. An initial machine frame according to any one of claims 1 to 11, **characterised in that** the beam (32) has means for fastening hoisting gear.

13. An initial machine frame according to any one of claims 1 to 12, **characterised in that** it is configured to receive an air compressor unit (1) having a piston compressor (2).

14. An initial machine frame according to claim 13, **characterised in that** the load beam device (30) is mountable in the region of the piston compressor (2).

## Revendications

1. Cadre évolutif (10) pour machines, conçu pour recevoir des machines ou des installations et muni d'un bâti tridimensionnel d'encadrement comprenant des montants verticaux (16a-d), et des entretoises horizontales inférieures et supérieures (12a-d, 14a-d), ledit cadre évolutif pour machines pouvant être transformé en un cadre pour machines équipé d'un dispositif à poutre de charge,
sachant que seuls sont utilisés des éléments constitutifs déjà présents sur ledit cadre évolutif pour machines, **caractérisé par le fait que** le cadre évolutif pour machines comporte au moins une entretoise horizontale supérieure pourvue d'au moins un élément d'encadrement fixé de manière amovible et faisant partie de ladite entretoise horizontale, permettant ainsi de former dans ledit cadre pour machines, après dépose, une entretoise horizontale offrant un espace vacant.

2. Cadre évolutif pour machines, selon la revendication 1, **caractérisé par le fait que** le dispositif (30) à poutre de charge peut être installé sur une entretoise horizontale supérieure (12a-d).

3. Cadre évolutif pour machines, selon la revendication 1 ou 2, **caractérisé par le fait que** le dispositif (30) à poutre de charge présente au moins un composant (36) de poutre de charge, situé sur ledit cadre évolutif (10) pour machines, et/ou au moins un élément (22a-d) dudit cadre évolutif (10) pour machines.

4. Cadre évolutif pour machines, selon l'une des revendications 1 à 3, **caractérisé par le fait que** le dispositif (30) à poutre de charge comprend deux jambages d'appui (34a, b), et une poutre (32) reliant les deux jambages d'appui (34a, b).

5. Cadre évolutif pour machines, selon l'une des revendications 1 à 4, **caractérisé par le fait que** le dispositif (30) à poutre de charge est installé dans la région de l'élément d'encadrement (22a-d) fixé de manière libérable.

6. Cadre évolutif pour machines, selon l'une des revendications 1 à 5, **caractérisé par le fait que** le dispositif (30) à poutre de charge, ou le composant (36) de poutre de charge, est monté sur une entretoise (12a-d, 14a-d, 16a-d) avec faculté de rabat ou de pivotement d'une position de repos à une position de travail, et inversement.

7. Cadre évolutif pour machines, selon l'une des revendications 3 à 6, **caractérisé par le fait que** le composant (36) de poutre de charge présente au moins un jambage d'appui (34a, b).

8. Cadre évolutif pour machines, selon l'une des revendications 3 à 7, **caractérisé par le fait que** le composant (36) de poutre de charge peut être relié à au moins un élément d'encadrement (22a-d) fixé de manière libérable.

9. Cadre évolutif pour machines, selon l'une des revendications 1 à 8, **caractérisé par le fait que** le dispositif (30) à poutre de charge est constitué d'éléments d'encadrement (22a-d) fixés de manière libérable.

10. Cadre évolutif pour machines, selon l'une des revendications 3 à 9, **caractérisé par le fait que** les éléments d'encadrement (22a-d) sont reliés les uns aux autres, ou au composant (36) de poutre de charge, avec faculté de vissage et/ou d'emboîtement.

11. Cadre évolutif pour machines, selon l'une des revendications 3 à 10, **caractérisé par le fait que** l'élément d'encadrement (22a-d), et/ou le composant (36, 38) de poutre de charge, comporte(nt) une plaquette de montage (40) aux extrémités.

12. Cadre évolutif pour machines, selon l'une des revendications 1 à 11, **caractérisé par le fait que** la poutre (32) présente des moyens de fixation d'un appareillage élévateur.

13. Cadre évolutif pour machines, selon l'une des revendications 1 à 12, **caractérisé par le fait qu'**il est réalisé en vue de recevoir une installation (1) à compresseur d'air, équipée d'un compresseur (2) à pistons.

14. Cadre évolutif pour machines, selon la revendication 13, **caractérisé par le fait que** le dispositif (30) à poutre de charge peut être installé dans la région du compresseur (2) à pistons.
